# EUROPEAN PATENT SPECIFICATION

(11) **EP 2 425 724 B1**
(45) Date of publication and mention of the grant of the patent: **25.03.2015**
(21) Application number: 11150828.9
(22) Date of filing: 13.01.2011
(51) Int. Cl.: A23N 12/02, A23N 12/06

(54) **Machine for cleaning and washing olives**
Maschine zum Reinigen und Waschen von Oliven
Machine pour nettoyer et laver les olives

(30) Priority: 01.09.2010 ES 201031307
(43) Date of publication of application: 07.03.2012
(73) Proprietor: Calero Ruiz, Francisco Jose, 18210 Granada (ES)
(72) Inventor: Calero Ruiz, Francisco Jose, 18210 Granada (ES)
(74) Representative: Isern-Jara, Nuria

(56) References cited:
- ES-A2- 2 051 166
- ES-U- 1 067 920
- FR-A1- 2 513 091
- GB-A- 764 565
- GB-A- 1 502 449

## Description

The present invention refers to a machine for cleaning and washing olives that incorporates as the main novelty compared to the machinery used today for the same purpose, a crossrod conveyor belt, with simultaneous transfer and shaking, for cleaning and washing of olives. Likewise, it is possible to adapt the system for the collection and cleaning of olives in the same place where production takes place, i.e., in the field.

### STATE OF THE PRIOR ART

The existence of units or devices for the cleaning of olives at the industrial scale that can mechanize the process of cleaning olives in a relatively simple and effective manner, with said cleaning operation consisting of the separation of the olives from branches and leaves, is known by the same applicant. The applicants of the present invention, for example, are former title holders of the Spanish utility model ES-1067920, filed under number 200800948.

From GB-1502449 a washing device for vegetable roots is known.

On the other hand, there are also known washing units or devices that perform washing operations in such a way that olives are cleaned and freed from any type of impurity. However, such devices are totally separate, which involves the provision of a larger work surface for the positioning thereof and a greater number of auxiliary supply elements, such as access ramps, for each one of the devices.

However, none of the apparatus or machines known by the applicant considers the existence of an invention that has the characteristics described in the first claim of the application, which allow to improve and optimize the treatment process of the olives, increase production yields and reduce maintenance costs.

### EXPLANATION OF THE INVENTION

The invention herein has been developed with the aim of providing a cleaning and washing machine with a crossrod conveyor belt system for treating olives that resolves the aforementioned drawbacks, providing, in addition, other additional advantages as described hereinafter.

It is therefore a first object of the present invention to provide an olive cleaning and washing machine assembly and an element for cleaning and washing of olives, both in the form of a fixed machine as well as of a mobile or field machine, which is characterized essentially by the fact that it comprises mainly a first upper element, as a cleaner, provided with entry means towards a crossrod conveyor belt which the characteristic that it can vibrate and shake, means for separating the olives from impurities, means for spraying water on the olives and means for expulsion of impurities, wherein it is provided with an outlet located at the bottom of the first upper element, for the ejection of the olives.

On the other hand, a second element located at the lower part, as a washer, is structurally coupled to the first upper device, in such a way that the olives from the first upper device fall by gravity in a barrel provided with the second device, with said second device provided with spraying means, stone ejection means and extraction means for olives already cleaned and coupling means that joins fixedly the first and second devices described hereinabove.

Interposed between both upper and lower elements there is a crossrod conveyor belt with a shower system positioned on the upper part thereof, with the purpose of wetting and pre-washing the fruit that circulates through the aforementioned prewash conveyor belt.

Thanks to these characteristics, a machine capable of reducing the work surface is obtained with a reduction in manufacturing costs, while additionally achieving energy and water consumption savings as well as less use of auxiliary equipment, in particular, those used for the transport of olives from one machine to another, in the same way as in prior art, on carrying out the cleaning and washing operations in a continuous and balanced process, a fact that involves a single point of entry and exit.

Likewise, thanks to the new transport system by means of a crossrod conveyor belt, the production of processed olives is increased, both for green olives as well as for oil, and facilitates the separation of soil and partially of leaves in the cleaning machine, as well as the separation and drainage of water both in the pre-wash (showers) as well as in the washer.

In accordance with another aspect of the machine of the invention, the separating means consists of a horizontal crossrod conveyor belt associated to a motor-reducer suitable for carrying out a longitudinal transport, shaking and vibration movement during a condition of operation. This crossrod conveyor belt has been especially adapted for treatment of olives in one of its various varieties and forms.

Preferably, the inlet means to the upper device consists of a conveyor belt.

The expulsion means consists of a plurality of separate air turbines such that each turbine works individually.

In an embodiment of the machine of the invention, the coupling means comprises an intermediate platform that has a flat portion that partially rests on part of the first device and several downward extensions as a point of support that are coupled to the device located below.

Throughout the description and the claims the term "comprises" and variants thereof are not intended to exclude other technical characteristics or components. For the skilled in the art, other objects, advantages and characteristics of the invention will emerge in part from the description and in part from the practice of the invention. The following examples and drawings are provided by way of illustration, and are not intended to be limiting of the present invention. Additionally, the present invention covers all possible combinations of particular and preferred embodiments set forth herein.

### BRIEF DESCRIPTION OF THE DRAWINGS

- FIG 1.: Exploded elevation view of the machine for cleaning and washing olives in accordance with the present invention.
- FIG 2.: Schematic side elevation view of the machine for cleaning and washing olives.
- FIG 3.: Perspective view of the machine shown in the previous figures.
- FIG 4.: Longitudinal section view of the upper element as a cleaner.
- FIG 5.: Longitudinal section view of the lower element as a washer.
- FIG 6.: Longitudinal section view of the tank attached to the lower element as a washer.

### DETAILED EXPOSITION OF AN EMBODIMENT

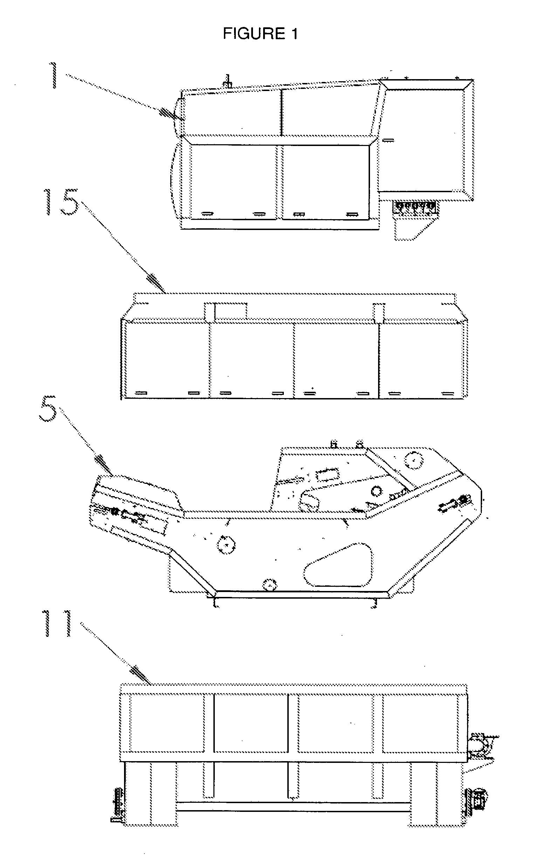

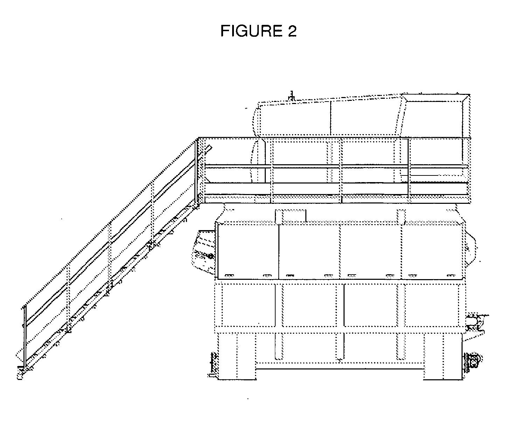

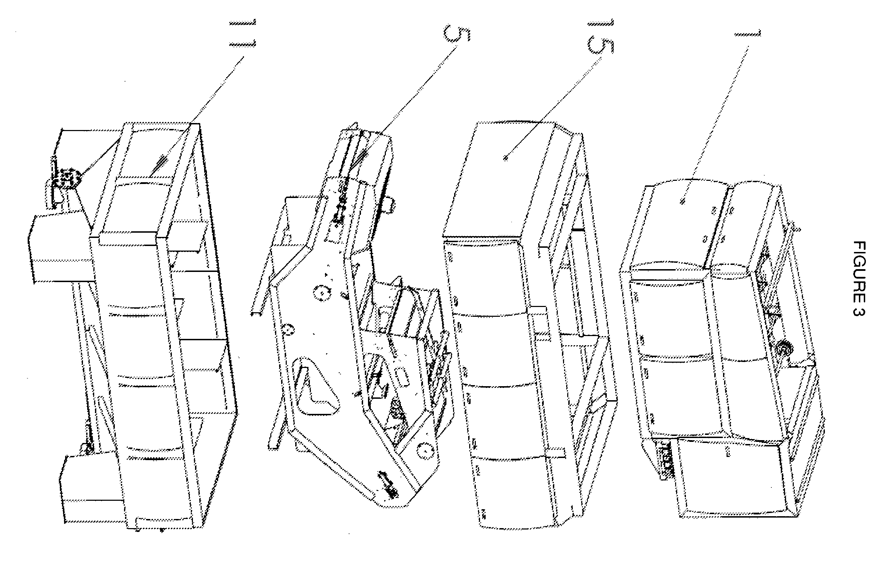

As shown from the figures 1 to 5, an embodiment of the machine for cleaning and washing olives of the invention comprises a first element (1) located on the upper part of the machine, which acts as a cleaner in which a batch of olives enters in a dirty condition and mixed with impurities in the form of leaves, stems, soil, stones.

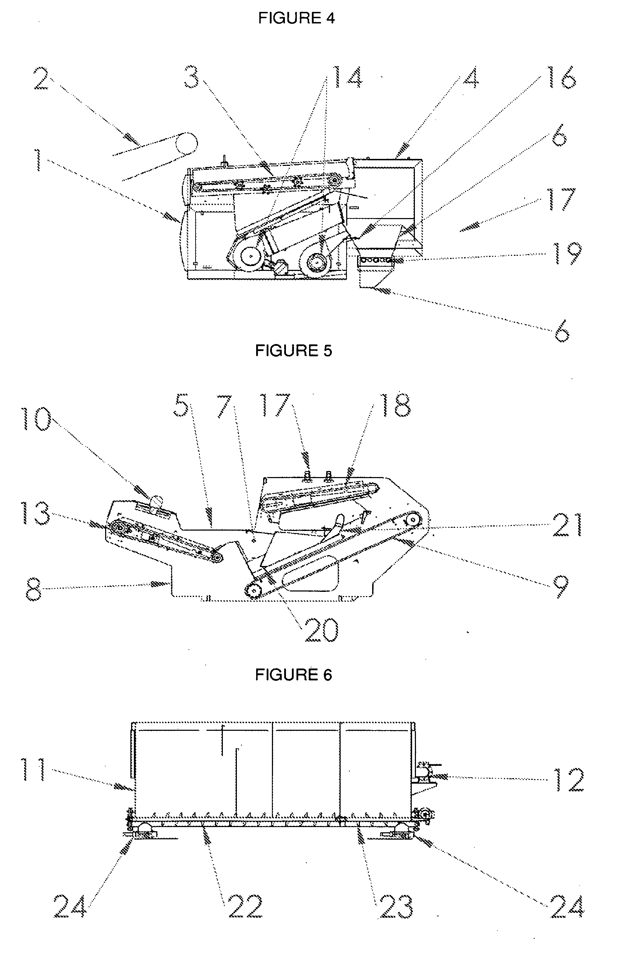

This first upper cleaning device (1) is provided on the upper part with a conventional conveyor belt (2) directed towards an elongated crossrod conveyor belt (3) located longitudinally, an exterior housing or chassis (4) with a substantially rectangular plan provided with olive separation means with respect to impurities and means for spraying water (16) on the olives. In addition, as can be seen in figure 4, it is also provided with expulsion means consisting of a plurality of air turbines (14) that remove the leaves and stems outwardly from the device (1), hence the operating power is regulated such that the olives are not ejected, with the leaves and stems being ejected outside the device (1) through the exit (17).

In addition, the machine of the invention presents a second element located inferiorly (5), which acts as a washer, wherein said lower element (5) is structurally coupled to the upper device (1) such that the olives fall by gravity through an outlet (6) in a barrel (7) provided on the washer second inferior element(5).

Said second element (5) is provided with an exterior housing (8) with a substantially rectangular plan provided with spraying means (17), stone evacuation means (9) and extraction means for the already cleaned olives (13).

With respect to the extraction means of the second element (5) as a washer, they consist of a first conveyor belt (9) and a second crossrod-wringer belt (13) which includes drying means for the olives consisting of air outlet nozzles (10) which may include heating means to heat the air which exits through the nozzles.

The crossrod conveyor belts (3 and 13) are oriented in an upward direction pulled by shaking axis and assemblies with driving and driven wheels.

Figures 5 and 6 show the presence of a water tank (11) attached to the element (5) as a washer through a closed hydraulic circuit, which exits through the water outlet (12) to maintain the water supply at all times, creating currents forced by flat metal channelling including two control valves for the water flow outlet (25) or drain (24) of the lower washer element (5) such that the housing of the lower element (5) is designed internally to accumulate water.

Likewise, the lower housing has a screw conveyor (22) and (23), in two opposite directions, for the ejection of impurities and mud. In the same way, it has a separate chamber, with the corresponding equally separate centrifugal pump thereof, to supply the showers for pre-washing and prior wetting of the fruit.

The first and second elements (1,5) are coupled together through an intermediate platform (15) which is provided with a flat portion defined by a frame on which the first element (1) and several extensions located on the corners as a support point and which protrude in a downward direction which are coupled to the device located below (5).

Additionally, the second element (5) is provided with *by-pass* means of the flat sliding or crossrod conveyor belt type (18) that allows to carry out or not a more complete washing, at will, diverting the passing of the olives from the device as a cleaner (1). As can also be seen in figure 5, the barrel (7) of the second device is provided with a driver element and an air injector element (20) in order to decant the impurities more easily thereby achieving better washing.

All the automated devices and elements provided in the machine described herein are managed from a single control point in order to facilitate the control of the assembly described herein.

Additionally, in order to facilitate maintenance and cleaning tasks of the upper device (1) by way of cleaning they are provided with side access doors.

## Claims

1. Machine for cleaning olives **characterized in that** it comprises, at least, a first upper element (1) or cleaning means that are provided with entry means to a crossrod conveyor belt (3) that is provided with translational and shaking movement, means for separating olives from impurities, means for spraying water (16) on the olives and means for expulsion of impurities, wherein it is provided with an outlet located inferiorly to said upper element (1) for the exit of the olives to a second element (5) located below, as a means of washing, coupled structurally to the first upper element (1); all this such that the olives from the first upper element (1) fall by gravity in a barrel (7) provided in the second lower element (5), said second element being provided with spraying means (17), stone ejection means (9) and means for extraction of already cleaned olives (13), as well as coupling means that joins fixedly the first and second elements.

2. A machine according to claim 1, **characterized in that** the separating means consists of a crossrod conveyor belt associated to a motor-reducer suitable for carrying out a translational and vibrating shaking movement during a condition of operation.

3. A machine according to claim 1 and 2, **characterized in that** the entry means of the first device consists of a conveyor belt.

4. A machine according to previous claims, **characterized in that** the expulsion means consists of a plurality of air turbines.

5. A machine according to previous claims, **characterized in that** the extraction means of the second element as a washer consists of a crossrod conveyor belt that includes drying means for the olives.

6. A machine according to previous claims, **characterized in that** the coupling means comprises an intermediate platform that has a flat portion on which partially rests the first element and several downward extensions as a support point coupled to the element located inferiorly.

7. A machine according to previous claims, **characterized in that** the second device is provided with by-pass means of a flat or crossrod conveyor belt type with upper shower incorporated, located at the entry point of the olives coming from the upper element.

8. A machine according to previous claims, **characterized in that** the barrel of the second device is provided with an air discharge element.

## Patentansprüche

1. Maschine zum Reinigen von Oliven, **dadurch gekennzeichnet, dass** sie zumindest ein erstes oberes Element (1) oder Reinigungsmittel, welche mit Einlassmitteln zu einem Querstabförderband (3), welches sich translatorisch und schüttelnd bewegt, versehen sind, Mittel zum Entfernen von Schmutz der Oliven, Mittel (16) zum Aufsprühen von Wasser auf die Oliven und Mittel zum Ausstoßen von Schmutz umfasst, wobei sie mit einer Auslassöffnung versehen ist, welche unterhalb des genannten oberen Elements (1) gelegen ist, um die Oliven an ein zweites, darunter liegendes Element (5) auszugeben, welches eine Waschvorrichtung ist, die strukturell mit dem ersten oberen Element (1) verbunden ist; so dass die Oliven aufgrund der Schwerkraft vom ersten oberen Element (1) in eine Tonne (7) fallen, welche im zweiten unteren Element (5) vorgesehen ist, wobei das genannte zweite Element mit Sprühmitteln (17), Entkernungsmitteln (9) und Mitteln zur Entnahme von bereits gereinigten Oliven (13) sowie Koppelmitteln, welche das erste und das zweite Element fest verbinden, versehen ist.

2. Maschine nach Anspruch 1, **dadurch gekennzeichnet, dass** die Entfernungsmittel aus einem Querstabförderband bestehen, welches mit einem Getriebemotor verbunden ist, welcher zum Ausführen einer translatorischen und vibrierenden Schüttelbewegung während eines Betriebszustands geeignet ist.

3. Maschine nach Anspruch 1 und 2, **dadurch gekennzeichnet, dass** die Einlassmittel der ersten Vorrichtung aus einem Förderband bestehen.

4. Maschine nach den vorherigen Ansprüchen, **dadurch gekennzeichnet, dass** die Ausstoßmittel aus einer Vielzahl von Luftturbinen bestehen.

5. Maschine nach den vorherigen Ansprüchen, **dadurch gekennzeichnet, dass** die Entnahmemittel des zweiten Elements als Waschvorrichtung aus einem Querstabförderband bestehen, welches Trocknungsmittel für die Oliven beinhaltet.

6. Maschine nach den vorherigen Ansprüchen, **dadurch gekennzeichnet, dass** die Koppelmittel eine Zwischenpattform umfassen, welche einen flachen Teil aufweist, auf welchem das erste Element und mehrere nach unten verlaufende Fortsätze als Stützpunkt, welche mit dem darunter gelegenen Element gekoppelt sind, teilweise aufliegen.

7. Maschine nach den vorherigen Ansprüchen, **dadurch gekennzeichnet, dass** die zweite Vorrichtung mit Umlenkmitteln von der Art eines flachen Förderbands oder eines Querstangenförderbands mit einer oberen integrierten Dusche versehen ist, welche an der Eintrittsstelle der vom oberen Element kommenden Oliven gelegen sind.

8. Maschine nach den vorherigen Ansprüchen, **dadurch gekennzeichnet, dass** die Tonne der zweiten Vorrichtung mit einem Luftabströmelement versehen ist.

## Revendications

1. Machine de nettoyage des olives **caractérisée** parce qu'elle comprend, au moins, un premier élément supérieur ou les moyens de nettoyages qui sont pourvus de moyens d'entrée vers une bandes de transport à barreaux qui est pourvue d'un mouvement longitudinal de translation et de secousse, des moyens de séparation des olives et des moyens d'expulsion des impuretés, d' une bouche de sortie située dans la partie inférieure du dit élément supérieur pour la sortie des olives vers le deuxième élément situé inférieurement, à titre de moyen de lavage, assemblé structurellement au premier élément supérieur; cela de sorte que les olives sortant du premier des éléments supérieur tombent par gravité dans une cuve appartenant au deuxième élément inférieur, se deuxième élément est pourvu de moyens d'aspersions, des moyens d'évacuation de pierres et de moyens d'extraction des olives lavées, ainsi que les moyens de fixations qui unissent le premier et le deuxième des éléments.

2. Une machine conformément à la revendication 1, **caractérisée** parce que les moyens de séparation consistent en une bande de transport à barreaux associé à un moteur et un moto - réducteur apte pour réaliser un mouvement de translation et secousse pendant une condition du fonctionnement.

3. Machine conformément aux revendications 1 et 2 qui se caractérise parce que les moyens d'entrée du premier dispositif consistent en un ruban de transport.

4. Machine conformément aux revendications antérieures qui se caractérise parce que les moyens d'expulsion consistent en un ensemble de turbines d'air.

5. Machine conformément aux revendications antérieures qui se caractérise parce que les moyens d'extraction du deuxième élément à titre de machine à laver consistent en bandes de transport à barreaux qui inclut des moyens de séchage pour les olives.

6. Machine conformément aux revendications antérieures qui se caractérise parce que les moyens d'accouplement comprennent une plate-forme intermédiaire qui dispose d'une portion plate sur laquelle repose partiellement le premier élément et de prolongations descendantes à titre de points d'appuis que l'on assemble à l'élément situé inférieurement.

7. Machine conformément aux revendications antérieures qui se caractérise parce que le deuxième dispositif est pourvu d'un by-pass du genre bande de transport plate ou bandes de transport à barreaux avec douche supérieur inclue, située à l'entrée des olives provenant de l'élément supérieur.

8. Machine conformément aux revendications antérieures qui se caractérise parce que la cuve du deuxième dispositif est pourvue d'un élément injecteur d'air.
